**Europäisches Patentamt**

**European Patent Office**

**Office européen des brevets**

(11) Veröffentlichungsnummer: **0 160 889**
**B1**

(12) # EUROPÄISCHE PATENTSCHRIFT

(45) Veröffentlichungstag der Patentschrift:
**19.11.87**

(21) Anmeldenummer: **85104995.7**

(22) Anmeldetag: **25.04.85**

(51) Int. Cl.⁴: **B 29 C 59/12**

(54) **Verfahren und Vorrichtung zur Oberflächenbehandlung von Folienbahnen.**

(30) Priorität: **04.05.84 DE 3416405**

(43) Veröffentlichungstag der Anmeldung:
**13.11.85 Patentblatt 85/46**

(45) Bekanntmachung des Hinweises auf die Patenterteilung:
**19.11.87 Patentblatt 87/47**

(84) Benannte Vertragsstaaten:
**BE DE FR GB**

(56) Entgegenhaltungen:
**DE - A - 3 247 795**
**FR - A - 1 296 790**
**GB - A - 938 325**
**JP - B - 48 017 747**
**US - A - 3 142 630**
**US - A - 3 296 011**
**US - A - 3 959 567**

(73) Patentinhaber: **HOECHST AKTIENGESELLSCHAFT,**
**Postfach 80 03 20, D-6230 Frankfurt am Main 80 (DE)**

(72) Erfinder: **Kolbe, Andreas, Am Hohen Stein 8,**
**D-6200 Wiesbaden (DE)**
Erfinder: **Dinter, Peter, Am Wiesenberg 4,**
**D-6227 Oestrich-Winkel 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Oberflächenbehandlung von Substraten aus thermoplastischen Kunststoffen. Ferner umfasst die Erfindung auch eine Vorrichtung zur Durchführung des Verfahrens.

Bei der Herstellung von Folien zählt es zum üblichen Stand der Technik, die Folienoberflächen im Hinblick auf eine Steigerung der Verbundfestigkeiten oder zur Erzielung verbesserter Bedruckbarkeit elektrischer Coronabehandlung zu unterwerfen. Die Funktionsweise dieses Verfahrens sieht das Führen des zu behandelnden Films über eine elektrisch geerdete Stützfläche vor, die in den meisten Fällen eine drehbare Walze ist, sowie die Beaufschlagung der der Stützfläche abgewendeten Seite des Films mit einer elektrischen Coronaentladung, die durch die Speisung einer im Abstand zur Stützfläche angeordneten Elektrode mit einem hochfrequenten Wechselstrom hoher Spannung erzeugt wird. Im Verlauf der Jahre wurden die vielfältigsten Elektrodenkonstruktionen wie z.B. Platten-, Draht-, Kamm-, Messer-, Halbschalen-, Feder- oder Spindelelektroden aus unterschiedlichsten Materialien wie z.B. Metallen, Metalloxiden oder in letzter Zeit verstärkt Oxidkeramiken entwickelt, die aber prinzipiell an der Verfahrensweise nichts ändern:

Üblicherweise erfolgt die Oberflächenbehandlung unter Atmosphärendruck und in Anwesenheit von Luft. Die Suche nach einer Steigerung der Vorbehandlungseffektivität führte zur Entwicklung von Verfahren unter Einsatz von chemisch reaktionsfähigen Substanzen. Entsprechende Methoden werden u.a. in den Druckschriften US-A 3 142 630, GB-A 938 325, US-A 3 274 089, US-A 3 296 011 und FR-A 1 296 790 beschrieben. Kennzeichnendes Merkmal aller dieser Technologien ist das Einblasen reaktionsfähiger Gase oder Dämpfe in die zwischen den beiden Elektroden gezündete Coronaentladung.

Eine erweiterte Ausführungsvariante obiger Verfahren stellt die sogenannte Plasmabehandlung dar, die dadurch gekennzeichnet ist, dass zwecks Steigerung der kinetischen Energie der Ionen und Elektronen im elektrischen Feld der Prozess im Vakuum durchgeführt wird. Stellvertretend für diese Art der Behandlung sei die US-PS 3 057 792 genannt.

Ausserdem ist aus dem japanischen Dokument JP-B-48 017 747 ein Verfahren zur Coronabehandlung von Kunststoffsubstraten bekannt, bei dem durch Einbringen von Flüssigkeiten in das Entladungsplasma eine Oberflächenveränderung angestrebt wird. Hierzu wird eine Vorrichtung beschrieben, bestehend aus einer U-förmigen, an Hochspannung angeschlossen Sintermetallelektrode und einer mit einem dielektrischen Überzug versehenen Stahlwalze als geerdete Gegenelektrode. Zwischen den beiden Elektroden findet die durch die Hochspannung induzierte Coronaentladung statt, wobei die Flüssigkeit durch die Poren der Sintermetallelektrode diffundiert und so in den Entladungsraum gelangt. Auf das oben genannte Dokument bezieht sich der Oberbegriff der unabhängigen Ansprüche.

Die Erfolg betrifft demnach ein Verfahren zur Oberflächenbehandlung eines Substrates aus thermoplastischem Kunststoff, bei dem das Substrat in die Zone der zwischen zwei mit elektrischer Hochspannung beaufschlagten Elektroden ablaufenden Coronaentladung geführt wird, und mindestens eine Oberfläche des Substrates gleichzeitig mit der Coronabehandlung in der Coronaentladungszone mit reaktiven ionisierten Substanzen aus flüssiger Phase beaufschlagt wird, dadurch gekennzeichnet, dass die Coronaentaldung zwischen einer Flüssigkeit und der Gegenelektrode stattfindet.

Ausserdem umfasst die Erfindung eine Vorrichtung zur Durchführung des Verfahrens umfassend eine Stützfläche und eine Hochspannungselektrode, die über ein Hochspannungskabel mit einem Hochspannungsgenerator verbunden ist, dadurch gekennzeichnet, dass die Hochspannungselektrode ein zu der Stützfläche hin geöffnetes Elektrodenprofil ist, das mit einer Flüssigkeit befüllt ist, wobei die Flüssigkeit selbst die Funktion der spannungsführenden Elektrode erfüllt.

Insbesondere soll das Substrat in Bahnform, bevorzugt in Form einer Folie, vorliegen.

In einer bevorzugten Ausführungsform des Verfahrens sollen die ionisierten Substanzen aus in Flüssigkeit gelöstem Zustand in die Coronaentladungszone eingebracht werden. Weitere bevorzugte Ausführungsformen des Verfahrens und der Vorrichtung sind Gegenstand der abhängigen Ansprüche. Es muss als besonders überraschend gelten, dass das Verfahren in dieser Form durchführbar ist, da bei bisherigen Versuchen, bei denen Flüssigkeiten in herkömmliche Coronaentladungsapparaturen eingebracht wurden, stets die eingeschleppte Flüssigkeit zu Kurzschlüssen bzw. Dielektrikumsdurchschlägen und damit zur Zerstörung der behandelten Folien führte.

Das erfindungsgemässe Verfahren lässt sich daher mit herkömmlichen Vorrichtungen nicht durchführen, sondern es ist eine Vorrichtung erforderlich, bei der jeweils die für das Verfahren eingesetzte Flüssigkeit als «aktive» Elektrode notwendiger Bestandteil des Elektrodensystems ist, d.h. die Flüssigkeit wird zur Ausbildung der Coronaentladung herangezogen. Durch direktes Einbeziehen der Flüssigkeit in den Entladungsprozess werden Reaktionsmechanismen ausgelöst, die ihren Niederschlag in einer chemischen Modifizierung der Oberfläche der behandelten Folie finden. Je nach Art der verwendeten Flüssigkeit werden auf der behandelten Kunststoffoberfläche aktive Zentren in Form von funktionellen Gruppen und Radikalen erzeugt, die für die Folgeprozesse Reaktionspartner darstellen.

Die Vorrichtung, mit der das erfindungsgemässe Verfahren durchgeführt wird, soll dem besseren Verständnis halber gleich anhand der Zeichnungen erläutert werden.

Fig. 1 zeigt schematisch die einfachere Ausführungsform der Vorrichtung.

Fig. 2 zeigt schematisch eine durch eine konventionelle Coronabehandlungsvorrichtung ergänzte Vorrichtung.

Fig. 3 zeigt eine erfindungsgemässe Vorrichtung in schematischer Darstellung, in der das Substrat gleichzeitig mit verschiedenen Flüssigkeiten behandelt werden kann.

Fig. 4 zeigt eine schematische Darstellung einer erfindungsgemässen Vorrichtung, mit der gleichzeitig eine Gasbeaufschlagung durchgeführt werden kann.

Die Vorrichtung zur Durchführung des Verfahrens besteht in der einfachsten Ausführungsform aus einer geerdeten Stützfläche, über die das Substrat geführt wird, und einer Hochspannungselektrode. Das kennzeichnende Merkmal der Vorrichtung ist darin zu sehen, dass die Hochspannungselektrode ein zu der Stützfläche hin geöffnetes Elektrodenprofil 4 ist, das mit einer Flüssigkeit 5 befüllt ist. Die Stützfläche ist bevorzugt als Walze 2 ausgebildet, die mit einer Isolationsschicht 3 überzogen ist.

Das Elektrodenprofil besteht bevorzugt aus dielektrischem Material wie Glas, Keramik, Porzellan oder Kunststoff und liegt in Form einer nach oben offenen Wanne, einer Rinne, einer Schale oder einer Mulde vor, die mit Flüssigkeit befüllt werden kann.

Die Flüssigkeit ist bevorzugt eine anorganische oder eine nicht brennbare organische Flüssigkeit, besonders bevorzugt eine wässrige Lösung. Insbesondere können zur Anwendung kommen wässrige Lösungen organischer Säuren wie Essigsäure, Propionsäure, Halogenessigsäure, z.B. Trichloressigsäure, Oxalsäure, Malonsäure oder Hydroxycarbonsäuren oder Gemische oder Salze von diesen. Es können auch wässrige Lösungen von anorganischen Säuren oder Laugen oder deren Salzen verwendet werden wie z.B. Schwefelsäure oder Sulfate, Salzsäure oder Chloride, Chlorite, Chlorate, Natronlauge, Kalilauge oder entsprechende Hydroxyverbindungen oder Ammoniak bzw. Ammoniumsalze. Ausserdem können auch organische Lösemittel, bevorzugt solche, die mit Wasser mischbar sind, eingesetzt werden. Beispiele hierfür sind Alkohole wie Ethanol oder Methanol, Ketone wie Methylethylketon oder wie Aceton, Dimethylformamid, Dimethylsulfoxid, Tetrahydrofuran u.a. Die vorstehende Aufzählung von Flüssigkeiten oder Flüssigkeitszusätzen soll nicht erschöpfend sein, sie stellt nur einen Ausschnitt aus der Vielzahl der mit dem erfindungsgemässen Verfahren erzielbaren Variationsmöglichkeiten der Oberflächenbehandlung von Kunststoffsubstraten dar.

Die Flüssigkeit 5 soll bevorzugt das Elektrodenprofil 4 bis zum Rand befüllen und wird über einen in das Elektrodenprofil 4 eingelassenen Kontaktstift 6, der über ein Hochspannungskabel 7 mit dem Generator 8 verbunden ist, mit einem hochfrequenten Wechselstrom hoher Spannung beaufschlagt. Auf diese Weise wird so zwischen Walze 2 und Flüssigkeit 5 eine Coronaentladung gezündet, durch die die zu behandelnde Substratbahn 1 hindurchgeführt wird. Da die Flüssigkeit 5 identisch ist mit der spannungsführenden Elektrode, ist sie zwangsläufig mit in den Entladungsmechanismus, d.h. die Freisetzung von Elektronen, Ionisation und Anregung von Molekülen, eingeschlossen. Je nach Art der verwendeten Flüssigkeit werden chemische Reaktionen ausgelöst, die ihren Niederschlag in einer chemischen Modifizierung der Substratoberfläche finden. Da der erfindungsgemässe Prozess mit einem Verbrauch an Flüssigkeit verbunden ist, wird über ein Vorratsgefäss 10, das mit einer isolierenden Schlauchleitung 9 mit dem Elektrodenprofil 4 in Verbindung steht, kontinuierlich Flüssigkeit nachgefüllt.

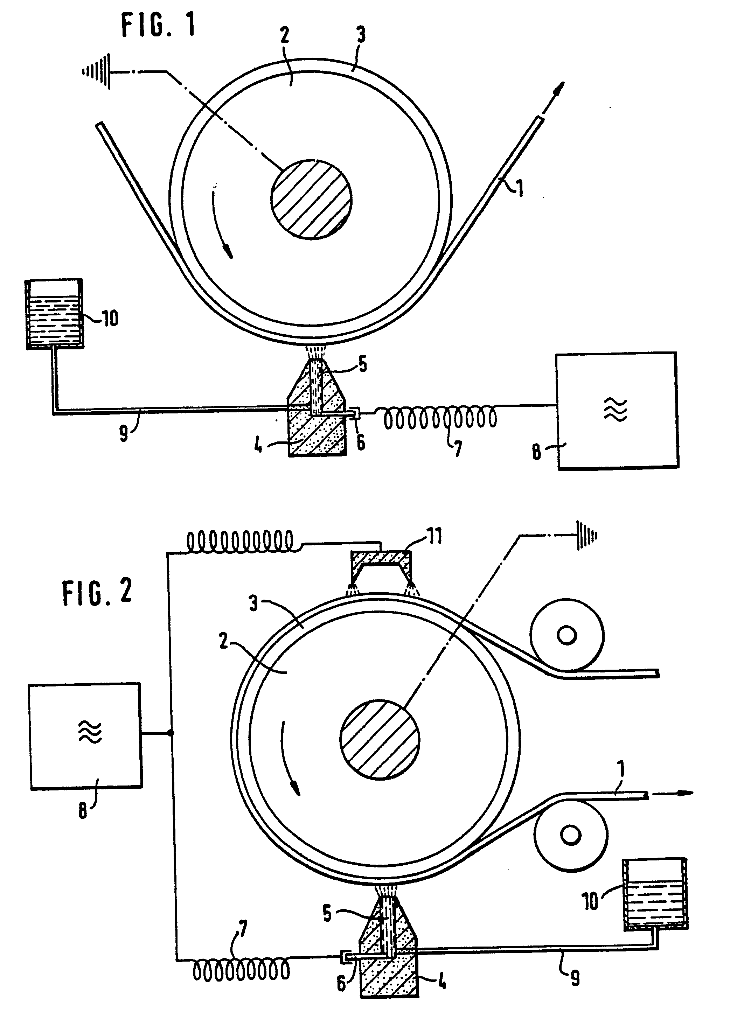

Gegenüber der Version gemäss Fig. 1 stellt die in Fig. 2 gezeigte Vorrichtung eine Kombination des erfindungsgemässen Verfahrens mit einer konventionellen Coronavorbehandlung dar. Die zusätzlich oberhalb der Walze 2 angebrachte Elektrode 11 dient einer Aktivierung der Folienoberfläche vor dem eigentlichen erfindungsgemässen Behandlungsschritt. Dabei können die beiden Elektroden 4 bzw. 11 entweder von einem einzigen Generator oder auch jede für sich von einem separaten Hochspannungsaggregat gespeist werden.

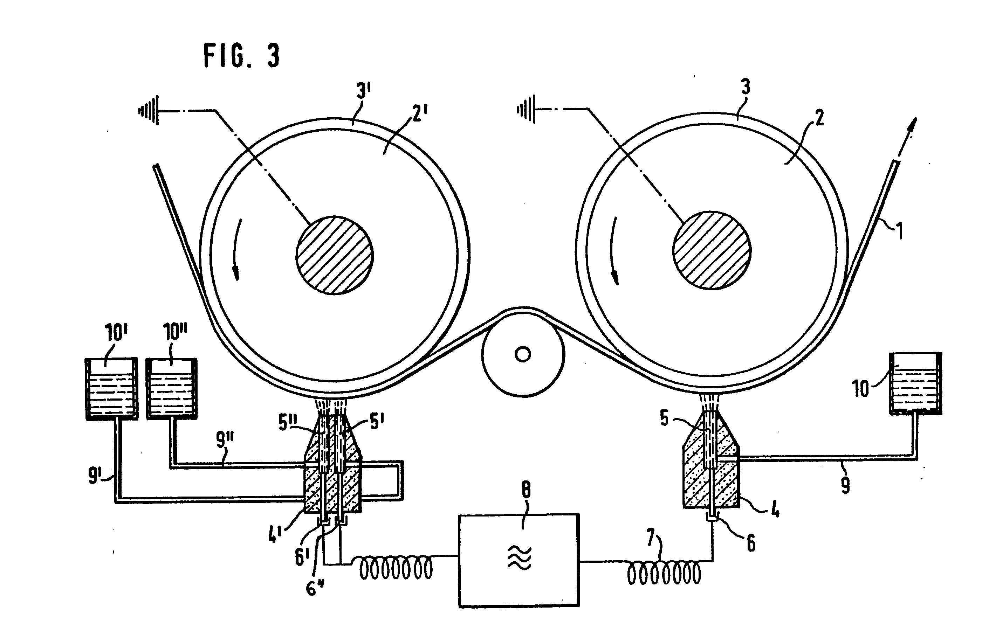

Die in der Fig. 3 dargestellte Vorbehandlungsstation gestattet die Durchführung des erfindungsgemässen Verfahrens in mehreren Folgeschritten, wobei unterschiedliche Flüssigkeiten verwendet werden können. Entsprechend ist die Anlage mit zwei Vorbehandlungswalzen 2, 2', die dielektrische Isolationsschichten 3, 3' tragen, ausgerüstet. An beiden Walzen sind unterschiedliche Elektrodenprofile 4, 4' zur Aufnahme der Behandlungsflüssigkeiten 5, 5', 5'' angeordnet. Die Flüssigkeiten gelangen aus Vorratsbehältern 10, 10', 10'' über Schlauchleitungen 9, 9', 9'' in die Elektrodenprofile 4, 4'. Über die Kontaktstifte 6, 6', 6'' und das Hochspannungskabel 7 können die Flüssigkeiten 5, 5', 5'' vom Generator 8 mit einem hochfrequenzen Wechselstrom hoher Spannung beaufschlagt werden. Auf diese Weise kann die die Tandemanlage durchlaufende Folienbahn 1 hintereinander mit verschiedenen Reaktionsmedien behandelt werden. Je nach Art der verwendeten Substanzen lassen sich so auf der Folienoberfläche polymerisierbare bzw. vernetzende Schichten aufbringen.

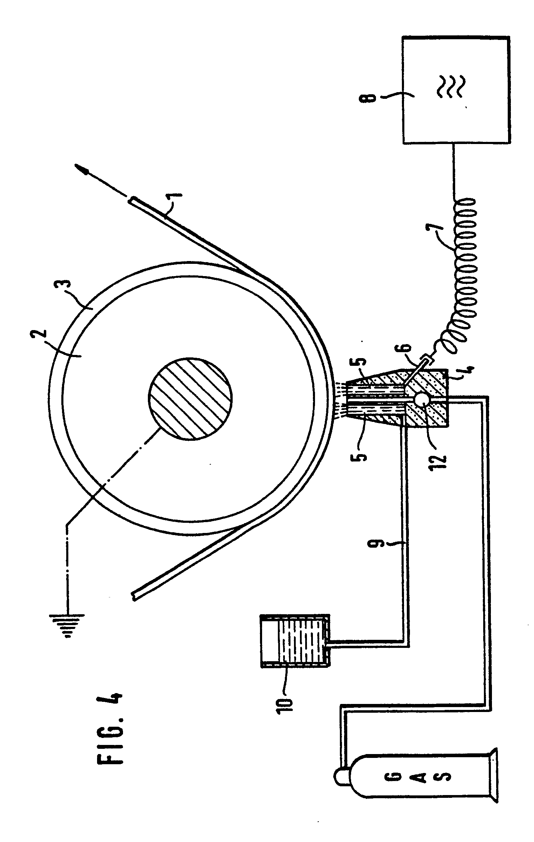

Mit der in Fig. 4 dargestellten Vorrichtungsvariante ist es möglich, das erfindungsgemässe Behandlungsverfahren mit einer Gasbehandlung zu kombinieren. Über eine Gasdusche 12 direkt in den Entladungsbereich eingeblasene Gase können mit den bei der Coronaentladung zwischen Flüssigkeit und Gegenelektrode anfallenden Produkten Reaktionen eingehen, die entsprechende chemische Veränderungen auf der Folienoberfläche zur Folge haben.

Die Anwendung des beschriebenen erfindungsgemässen Verfahrens und all seiner Varianten ist nicht an bestimmte Arbeitsbedingungen geknüpft. Es ist sowohl unter normalem Atmosphärendruck als auch im Vakuum praktizierbar.

Ein Parameter, der das Behandlungsergebnis mit beeinflusst, ist die elektrische Leitfähigkeit der für das Verfahren eingesetzten Flüssigkeit. Normalerweise besitzen die verwendeten Flüssigkeiten ausreichend grosse Leitfähigkeiten, um das Verfahren mit befriedigenden Ergebnissen durchführen zu können. Falls aber Flüssigkeiten mit niedrigen Leitfähigkeiten, insbesondere nichtionische organische Flüssigkeiten, eingesetzt werden sollen, hat es sich in der Praxis als besonders günstig erwiesen, wenn in das Elektrodenprofil eine metallische Elektrode, z.B. ein dünner Draht, eingebracht wird, deren Position aber generell einige wenige Millimeter unter der Flüssigkeitsoberfläche liegen muss.

Im Normalfall können die Flüssigkeiten ohne besondere verfahrenstechnische Massnahmen dem Elektrodenprofil zugeführt werden. Unter Umständen kann es aber vorteilhaft sein, die Flüssigkeit über die durch die anfallende Prozesswärme zwangsläufig vorgegebene niedrige Temperatur hinaus zu erwärmen, wodurch der Molekülverband beweglicher und die Flüssigkeit damit reaktionsfreudiger wird.

Gegenüber den bekannten Coronavorrichtungen unterscheidet sich die erfindungsgemässe Vorrichtung insbesondere durch die neuartige Elektrode. Im Hinblick auf Erzielung einer hohen Energiedichte an der Elektrode hat es sich als vorteilhaft herausgestellt, die an der Entladung beteiligte Elektrodenoberfläche möglichst gering zu halten, um eine scharf gebündelte Coronaentladung zu bekommen. Diese Forderung wird von den in den Figuren 1 bis 4 skizzierten Elektrodenprofilen erfüllt, die schmale, nur etwa 3 bis 4 mm breite Rinnen bzw. Nuten aufweisen. Wie in Fig. 3 dargestellt ist der Einsatz von Elektrodenprofilen mit einer oder auch mehreren Nuten möglich.

Die Kopplung des Elektrodenprofils mit dem Hochspannungsgenerator erfolgt über einen metallischen Kontakt, der in die mit Flüssigkeit befüllte Rinne hineinragt.

Alternativ zum bisher behandelten Elektrodenaufbau, bei dem das mit Flüssigkeit befüllte Elektrodenprofil die spannungsführende Elektrode, die Walze aber die geerdete Gegenelektrode darstellen, ist auch eine Umkehr dieser Anordnung möglich. In diesem Fall hat es sich als vorteilhaft erwiesen, den als Stützfläche verwendeten metallischen Walzenkörper mit dielektrischer Schicht durch die in der EP-PS 0 002 453 beschriebene Walzenkonstruktion zu ersetzen und das mit Flüssigkeit befüllte Elektrodenprofil zur geerdeten Gegenelektrode umzufunktionieren. Mit dieser Walzenkonstruktion lässt sich die in Fig. 2 dargestellte Verfahrensvariante der Doppelbehandlung auf einfache und elegante Art realisieren.

Bei der praktischen Erprobung des erfindungsgemässen Verfahrens und der Vorrichtung hat sich herausgestellt, dass als elektrische Versorgungsaggregate mehr oder weniger ausnahmslos alle auf dem Markt angebotenen Coronageneratoren geeignet sind, unbeachtet dessen, welche Ausgangsfrequenz sie auch liefern.

Da der Entladungsprozess mit einem Verbrauch der verwendeten Flüssigkeit gekoppelt ist, muss für ständigen Flüssigkeitsnachschub gesorgt werden. Dieses kann in einfachster Form über Standbehälter im freien Zulauf oder alternativ dazu mittels Dosierpumpen erfolgen.

Das vorliegende erfindungsgemässe Verfahren zur Modifizierung von Kunststoffoberflächen mittels Coronaentladung erweitert durch die Einbeziehung von Flüssigkeiten in den Entladungsprozess die Möglichkeiten der chemischen Veränderung von Kunststoffmaterialien erheblich. Je nach Art der verwendeten Flüssigkeiten können auf die jeweils nachfolgenden Veredelungsschritte wie Beschichten, Drucken, Laminieren, Metallisieren usw. abgestimmte Oberflächenbehandlungen vorgenommen werden.

Besonders geeignet erwies sich das erfindungsgemässe Verfahren bei der Vorbehandlung von Folienbahnen, die zu Laminaten weiterverarbeitet werden. Dabei werden die Oberflächen zweier voneinander unabhängiger Folienbahnen getrennt nach dem Verfahren behandelt und danach unter Druck- und Wärmebeaufschlagung zusammengeführt, wodurch eine dauerhaft feste Verbindung der Folienbahnen erreicht wird.

Das nachfolgend beschriebene Ausführungsbeispiel soll das erfindungsgemässe Verfahren noch deutlicher beschreiben.

*Beispiel*

Die Oberfläche einer Polyethylenterephthalatfolie einer Dicke von 50 µm wurde nach dem Verfahren gemäss der vorliegenden Erfindung behandelt. Als Flüssigkeit wurde eine wässrige Ammoniaklösung mit einer Konzentration von 30% eingesetzt. Die Folie wurde mit einer Geschwindigkeit von 20 m/min an der Behandlungsstation vorbeigeführt. Der Abstand zwischen der Elektrode und der Folie betrug 2 mm, und die Leistung des eingesetzten Mittelfrequenzgenerators betrug bei 24 kHz 1.000 W.

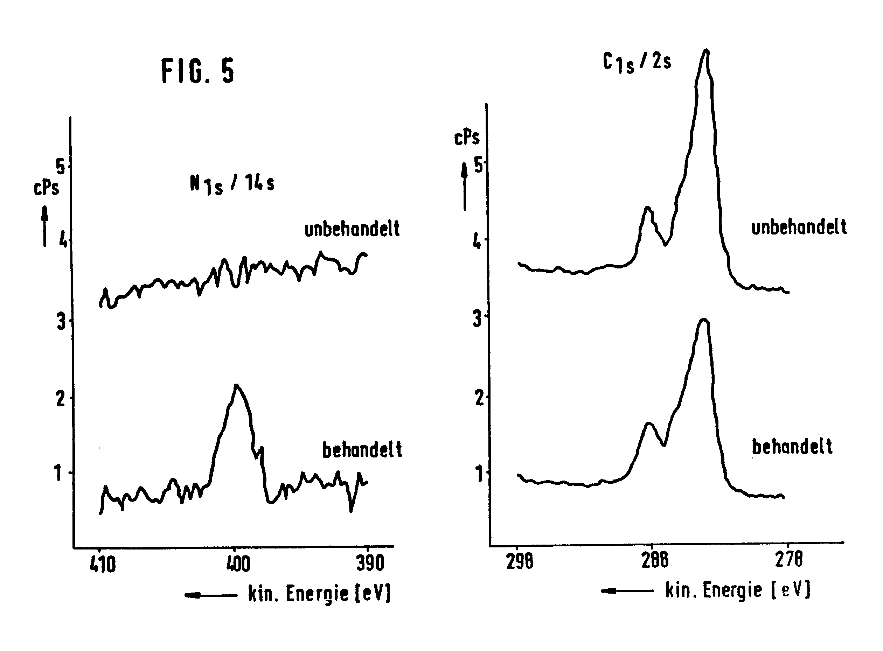

Eine so behandelte Folie wurde nach der Methode der ESCA-Spektroskopie (Electron Spectroscopy Chemical Analysis) untersucht. Bei dieser Methode wird die kinetische Energie von Elektronen, die den Molekülverband verlassen, ermittelt und gegenüber einer mit konstanter Energie eingestrahlten Röntgenstrahlung in Rechnung gesetzt. Auf die gleiche Methode wurde eine nicht behandelte Polyethylenrephthalatfolie untersucht. Die Ergebnisse sind in Fig. 5 dargestellt.

Die unbehandelte Folie zeigt keinerlei auf die Anwesenheit von Stickstoff hindeutende Anzeichen, während die wie vorstehend angegeben behandelte Folie in dem für Stickstoff charakteristischen Energiebereich (400 Elektronenvolt) ein deutliches Maximum aufweist. Überraschenderweise ist auch eine Beeinflussung im Bereich der für Kohlenstoff charakteristischen Energie (ca. 285 Elektronenvolt) beobachtet worden, welche ebenfalls in Fig. 3 dargestellt ist.

**Patentansprüche**

1. Verfahren zur Oberflächenbehandlung eines Substrates aus thermoplastischem Kunststoff, bei dem das Substrat in die Zone der zwischen zwei mit elektrischer Hochspannung beaufschlagten Elektroden ablaufenden Coronaentladung geführt wird, und mindestens eine Oberfläche des Substrates gleichzeitig mit der Coronabehandlung in der Coronaentladungszone mit reaktiven ionisierten Substanzen aus flüssiger Phase beaufschlagt wird, dadurch gekennzeichnet, dass die Coronaentladung zwischen einer Flüssigkeit und der Gegenelektrode stattfindet.

2. Verfahren nach Anspruch 1, dadurch gekennzeichnet, dass die ionisierten Substanzen aus in Flüssigkeit gelöstem Zustand in die Coronabehandlungszone eingebracht werden.

3. Verfahren nach Anspruch 1 oder 2, dadurch gekennzeichnet, dass das Substrat in Bahnform vorliegt.

4. Verfahren nach einem der Ansprüche 1 bis 3, dadurch gekennzeichnet, dass das Substrat nacheinander an zwei Coronabehandlungsstationen vorbeigeführt wird, wobei das Substrat mindestens bei einem Behandlungsschritt mit reaktiven ionisierten

7

8

Substanzen aus der flüssigen Phase beaufschlagt wird.

5. Verfahren nach Anspruch 4, dadurch gekennzeichnet, dass das Substrat im zweiten Behandlungsschritt mit reaktiven ionisierten Substanzen aus der flüssigen Phase beaufschlagt wird.

6. Verfahren nach Anspruch 4, dadurch gekennzeichnet, dass das Substrat in beiden Behandlungsschritten mit reaktiven ionisierten Substanzen aus der flüssigen Phase behandelt wird und dass in den beiden Behandlungsschritten unterschiedliche Substanzen eingesetzt werden.

7. Verfahren nach einem der Ansprüche 1 bis 6, dadurch gekennzeichnet, dass das Substrat gleichzeitig mit der Coronaentladung behandelt, mit reaktiven ionisierten Substanzen aus der flüssigen Phase beaufschlagt und mit reaktiven Gasen in Kontakt gebracht wird.

8. Vorrichtung zur Durchführung des Verfahrens nach einem der Ansprüche 1 bis 7, umfassend eine Stützfläche und eine Hochspannungselektrode, die über ein Hochspannungskabel (7) mit einem Hochspannungsgenerator (8) verbunden ist, dadurch gekennzeichnet, dass die Hochspannungselektrode ein zu der Stützfläche hin geöffnetes Elektrodenprofil (4) ist, das mit einer Flüssigkeit (5) befüllt ist, wobei die Flüssigkeit selbst die Funktion der spannungsführenden Elektrode erfüllt.

9. Vorrichtung nach Anspruch 8, dadurch gekennzeichnet, dass die Stützfläche eine geerdete Walze (2) ist, die mit einer Isolationsschicht (3) überzogen ist.

10. Vorrichtung nach einem der Ansprüche 8 oder 9, dadurch gekennzeichnet, dass das Elektrodenprofil (4) in Form einer Wanne, einer Rinne oder einer Schale vorliegt und aus elektrisch isolierendem Werkstoff besteht, ausgewählt aus der Gruppe Glas, Keramik, Porzellan oder Kunststoff, und dass innerhalb des Elektrodenprofils (4) ein Kontaktstift (6) angeordnet ist, über den die Flüssigkeit (5) mit elektrischer Hochspannung beaufschlagt wird.

11. Vorrichtung nach einem der Ansprüche 8 bis 10, dadurch gekennzeichnet, dass das Elektrodenprofil (4) über eine isolierte Flüssigkeitsleitung (9) mit einem Flüssigkeitsbehälter (10) in Verbindung steht.

12. Vorrichtung nach einem der Ansprüche 8 bis 10, dadurch gekennzeichnet, dass innerhalb des Elektrodenprofils (4) ein metallischer Leiter, bevorzugt ein Draht, unterhalb der Flüssigkeitsoberfläche und parallel zu dieser verlaufend angeordnet ist.

## Claims

1. Method for the surface treatment of a substrate made of a thermoplastics material, comprising introducing said substrate into the zone of corona discharge taking place between two electrodes, to which high voltage is supplied, and simultaneously subjecting at least one surface of said substrate to reactive ionized substances which are applied from a liquid phase, characterized in that said corona discharge takes place between a liquid and the counter electrode.

2. Method as claimed in claim 1, wherein said ionized substances are dissolved in a liquid when they are introduced into the corona treatment zone.

3. Method as claimed in claim 1 or 2, wherein said substrate is in the form of a web.

4. Method as claimed in any of claims 1 to 3, wherein said substrate is successively conveyed through two corona treatment stations, whereby in at least one processing step the substrate is subjected to reactive ionized substances from the liquid phase.

5. Method as claimed in claim 4, wherein the substrate is subjected to reactive ionized substances from the liquid phase in the second processing step.

6. Method as claimed in claim 4. wherein the substrate is subjected to treatment with reactive ionized substances from the liquid phase in each of the two processing steps and different substances are employed in each step.

7. Method as claimed in any of claims 1 to 6, wherein the substrate is simultaneously subjected to corona discharge treatment, treatment with reactive ionized substances from the liquid phase and treatment with reactive gases.

8. Device for working the method as claimed in any of claims 1 to 7, comprising a support surface and a high voltage electrode which via a high-voltage cable (7) is connected to a high-voltage generator (8), wherein said high-voltage electrode is a shaped electrode (4) which is open toward the support surface and filled with a liquid (5), said liquid being used as the live electrode.

9. Device as claimed in claim 8, wherein the support surface is a grounded roller (2) coated with an insulating layer (3).

10. Device as claimed in claim 8 or 9, wherein the shaped electrode (4) is in the shape of a trough open an the top, a groove or a shell and is made from an electrically insulating material, selected from the group including glass, ceramics, porcelain or plastics, and wherein a contact pin (6) is provided within the shaped electrode (4), through which pin the liquid (5) is charged with electric high voltage.

11. Device as claimed in any of claims 8 to 10, wherein the shaped electrode (4) is connected to a liquid supply tank (10), via an insulated tube (9).

12. Device as claimed in any of claims 8 to 10, wherein a metallic conductor, preferably a wire, is inserted into the shaped electrode (4), which conductor is positioned beneath the surface of the liquid and extends parallel to the latter.

## Revendications

1. Procédé de traitement de la surface d'un substrat en matière thermoplastique, où le substrat est acheminé dans une zone de décharge corona située entre deux électrodes sous haute tension électrique et où au moins une des surfaces du substrat est soumise simultanément au traitement par décharge corona dans la zone de cette dernière à un jet de substances ionisées réactives en phase liquide, caractérisé en ce que la décharge corona se produit entre un liquide et la contre-électrode.

2. Procédé selon la revendication 1, caractérisé en ce que les substances ionisées sont acheminées à l'état liquide dans la zone de décharge corona.

3. Procédé selon l'une quelconque des revendications 1 ou 2, caractérisé en ce que le substrat se présente sous forme de bande.

4. Procédé selon l'une quelconques des revendications 1 à 3, caractérisé en ce que le substrat est acheminé successivement dans deux postes de traitement par effet corona, et exposé à l'occasion d'au moins une opération du traitement à l'action de substances ionisées réactives an phase liquide.

5. Procédé selon la revendication 4, caractérisé en ce que le substrat est exposé pendant la deuxième opération du traitement, à des substances ionisées réactives en phase liquide.

6. Procédé selon la revendication 4, caractérisé en ce que le substrat est soumis, dans les deux séquences du traitement, à des substances ionisées réactives en phase liquide qui sont différentes pour chacune des deux séquences.

7. Procédé selon l'une quelconque des revendications 1 à 6, caractérisé en ce que le substrat est simultanément traité par décharge corona, exposé à des substances ionisées réactives en phase liquide, et mis en contact avec des gaz réactifs.

8. Dispositif pour l'application du procédé selon l'une quelconque des revendications 1 à 7, comprenant une surface d'appui et une électrode haute tension connectée à un générateur haute tension (8) par un câble haute tension (7), caractérisé en ce que l'électrode haute tension se présente sous la forme d'un profilé (4), dont l'ouverture est orientée vers la surface d'appui, et qui contient un liquide remplissant lui-même la fonction de l'électrode sous tension.

9. Dispositif selon la revendication 8, caractérisé en ce que la surface d'appui est un cylindre mis à la masse (2) et revêtu d'une couche isolante (3).

10. Dispositif selon l'une quelconque des revendications 8 ou 9, caractérisé en ce que l'électrode profilée (4) se présente sous la forme d'une cuvette, d'une gouttière ou d'une coupe fabriquée en un matériau électriquement isolant, sélectionné dans la famille du verre, de la céramique, de la porcelaine ou des matières plastiques, et en ce que, à l'intérieur de l'électrode (4) se trouve une tige de contact (6), par l'intermédiaire de laquelle le liquide (5) est mis sous une haute tension électrique.

11. Dispositif selon l'une quelconque des revendications 8 à 10, caractérisé en ce que, l'électrode (4) est reliée à un réservoir à liquide (10) par une conduite isolée (9).

12. Dispositif selon l'une quelconque des revendications 8 à 10, caractérisé en ce que, à l'intérieur de l'électrode profilée (4) est disposé, en dessous de la surface du liquide et parallèlement à celle-ci, un conducteur métallique, de préférence un fil.

**FIG. 1**

**FIG. 2**

FIG. 3

FIG. 4

GAS

FIG. 5